# EUROPÄISCHE PATENTSCHRIFT

(11) **EP 3 091 133 B1**
(45) Veröffentlichungstag und Bekanntmachung des Hinweises auf die Patenterteilung: **02.05.2018**
(21) Anmeldenummer: 15166600.5
(22) Anmeldetag: 06.05.2015
(51) Int. Cl.: E04B 2/74, E04H 1/12, F16B 7/04

(54) **HALTESYSTEM FÜR WANDELEMENTE**
HOLDING SYSTEM FOR WALL ELEMENTS
SYSTÈME DE RETENUE POUR ÉLÉMENTS DE PAROI

(43) Veröffentlichungstag der Anmeldung: 09.11.2016
(73) Patentinhaber: Palme group GmbH, 4775 Taufkirchen an der Pram (AT)
(72) Erfinder: Prader, Ralph, 4780 Schärding (AT)
(74) Vertreter: Köster, Hajo

(56) Entgegenhaltungen:
- DE-A1- 3 829 998
- DE-U1- 20 115 618
- FR-A- 1 519 944
- US-A1- 2014 305 063

## Beschreibung

Die Erfindung betrifft ein Haltesystem für Wandelemente im sanitären Bereich, insbesondere für Sanitärtrennwände, mit mindestens einer Schraubplatte, die zur Befestigung an einem Halteelement, an einer Wand, an einem Stützfuß, an einem weiteren Wandelement oder ähnlichem geeignet ist, und mit mindestens einer Halteplatte, die zur dauerhaften Anbringung an einem Wandelement sowie dazu geeignet ist, mit der Schraubplatte fest verbunden zu werden.

Derartige Wandelemente werden beispielsweise im öffentlichgewerblichen Bereich eingesetzt. In diesem Zusammenhang sind Schulen, Flughäfen, Gastronomie usw. zu nennen. Sanitärtrennwände dienen üblicherweise dazu, einen Bereich, in dem beispielsweise eine Toilette angeordnet ist, nach außen hin sowie auch zum benachbarten Toilettenbereich abzuschirmen.

Als Material für derartige Wandelemente bzw. Sanitärtrennwände wird üblicherweise ein wasserfestes Plattenmaterial und in einigen Fällen auch Glas eingesetzt. Die Platten der Wandelemente sind zudem voll umfänglich und somit sowohl an den seitlichen Seitenrändern als auch am oberen sowie am unteren Seitenrand eingefasst. Häufig werden dazu Metallschienen bzw. Metallprofile eingesetzt.

Die Elemente zur Befestigung derartiger Wandelemente an einer gemauerten Wand oder zum Abstützen auf dem Fußboden sind mit der Einfassung fest verbunden und halten die Wandelemente mittels der Einfassung an dem gewünschten Ort. DE 201,15,618 U1 offenbart ein Haltesystem für Wandelemente gemäß dem Oberbegriff des Anspruchs 1.

Aufgabe der vorliegenden Erfindung ist es, ein Haltesystem für Wandelemente der hier in Rede stehenden Art bereitzustellen, mit dessen Hilfe die Wandelemente vor Ort zu den gewünschten Konstruktionen, Trennwandsystemen und Einheiten einfach und verlässlich zusammengesetzt werden können.

Gelöst wird diese Aufgabe durch ein Haltesystem gemäß dem Anspruch 1.

Das erfindungsgemäße Haltesystem umfasst mindestens eine Schraubplatte und mindestens eine Halteplatte. Die Schraubplatte ist geeignet zur Befestigung an einem Halteelement, an einer Wand, an einem Stützfuß, an einem weiteren Wandelement oder ähnlichem. Sie kann somit an diesen Elementen befestigt bzw. damit verbunden werden.

Die Halteplatte ist dazu geeignet, dauerhaft an einem Wandelement angebracht zu werden. Sie ist ferner dazu geeignet, mit der Schraubplatte fest verbunden zu werden. Die Halteplatte kann somit zu diesen Zwecken eingesetzt werden.

Bei dem erfindungsgemäßen Haltesystem ist die Halteplatte zumindest bereichsweise mit einem Nut-Profil ausgestattet, das sich waagerecht erstreckt.

Die hier im Rahmen der vorliegenden Unterlagen benutzten Ausdrücke "waagerecht", "senkrecht", "horizontal" beziehen sich, sofern nichts anderes angegeben ist, auf den eingebauten und zusammengebauten Zustand und somit auf denjenigen Zustand, in dem sich die Wandelemente und die daraus zusammengesetzten größeren Einheiten im Betriebszustand vor Ort befinden.

Das erfindungsgemäße Haltesystem zeichnet sich ferner dadurch aus, dass in das Nut-Profil der Halteplatte mindestens ein Nutenstein eingesetzt ist.

Ferner ist die Querschnittsform des Nut-Profils und des Nutensteines derart ausgebildet, dass der Nutenstein in Längsrichtung des Nut-Profils darin verbleibend verschiebbar ist und aus dem Nut-Profil herausragt. Der Nutenstein kann somit innerhalb des Nut-Profils hin- und hergeschoben werden. Allerdings besitzt er eine solche Abmessung und eine solche Form, dass er aus dem Nut-Profil senkrecht dazu nicht herausbewegt werden kann. Diese Angabe bezieht sich jedoch nicht auf den Fall, dass sich das Nut-Profil bis zu einem Seitenrand erstreckt und dort offen ist. Aus diesem offenen Ende des Nut-Profils kann der Nutenstein in Längsrichtung des Nut-Profils herausgeschoben werden.

Das Haltesystem zeichnet sich ferner dadurch aus, dass die Halteplatte an einem ihrer horizontalen Seitenränder oder in der Nähe davon, jedoch auf der dem Nut-Profil gegenüberliegenden Seite, zumindest bereichsweise derart mit einer im Querschnitt im Wesentlichen U-förmigen Aufnahmenut für ein Wandelement ausgestattet ist, dass sich der Boden der U-Form im Wesentlichen horizontal erstreckt und die Öffnung der U-Form zur Mitte der Halteplatte zeigt. Anders ausgedrückt, die Öffnung ist in Richtung zur horizontalen Längsachse der Halteplatte hin offen. Befindet sich die Aufnahmenut am unteren Seitenrand, dann ist die Aufnahmenut nach oben hin offen, während sie nach unten hin offen ist, wenn sich die Aufnahmenut am oberen Seitenrand befindet.

Die Querschnittsform der U-Form kann im Prinzip beliebig sein. So kann der Boden beispielsweise rund oder gerade ausgebildet sein. Auch die Seitenränder der U-Form können parallel zueinander ausgerichtet sein oder können sich zur Öffnung des U erweitern. Auch ist es möglich, dass der Abstand der Seitenränder der U-Querschnittsform bei der Öffnung des Innenraums der U-Form nach außen geringer ist als im Bereich des Bodens der U-Form.

Einer der Seitenwände dieser Aufnahmenut wird zweckmäßigerweise durch die Halteplatte als solche gebildet. Der Boden und die andere Seitenwand werden durch Streifenelemente gebildet, die sich parallel zur Halteplatte erstrecken.

Nach einem weiteren kennzeichnenden Merkmal des erfindungsgemäßen Haltesystems ist die Schraubplatte mit einer horizontalen, zur Halteplatte hin offenen und somit in waagerechter Richtung hin offenen Nut ausgestattet, in welche der aus dem Nut-Profil herausragende Teil des Nutensteins hineinragt.

Das Querschnittsprofil der zur Halteplatte hin offenen Nut der Schraubplatte kann im Prinzip beliebig sein. Es ist lediglich erforderlich, dass der zu dieser offenen Nut hin zeigende Teil des Nutensteins in diese offene Nut hineinragen kann.

Ferner ist erfindungsgemäß mindestens ein Befestigungsmittel oder ein System von miteinander kooperierenden Befestigungsmitteln vorgesehen, das geeignet ist den Nutenstein mit der Schraubeplatte ortsfest zu verbinden.

Erfindungsgemäß besitzt die Halteplatte zwischen dem Nut-Profil und demjenigen ihrer horizontalen Seitenränder, an dem die Aufnahmenut vorgesehen ist, zumindest bereichsweise ein sich im Wesentlichen in horizontaler Richtung erstreckendes Hakenprofil. Der Hacken als solcher zeigt dabei zu dem Seitenrand hin.

Die Schraubplatte ist erfindungsgemäß an einem ihrer horizontalen Seitenränder zumindest bereichsweise derart mit einer im Querschnitt im wesentlich U-förmigen Haltenut ausgestattet, dass sich der Boden der U-Form der Haltenut im Wesentlichen horizontal erstreckt und die Öffnung der U-Form zur Mitte der Schraubplatte zeigt. Anders ausgedrückt, die Öffnung ist zur horizontalen Längsachse der Halteplatte offen. Bezüglich der genaueren Ausgestaltung der U-Form gilt das oben im Zusammenhang mit der U-Form des Nut-Profils Gesagte

Ferner ist der in die zur Halteplatte hin offenen Nut hineinragende Teil des Nutensteines in Längsrichtung der offenen Nut darin verschiebbar. Zudem greift die Halteplatte mit dem Hakenprofil in die Haltenut der Schraubplatte ein.

Schraubplatte und Halteplatte sind somit derart ausgebildet, dass der in das Nut-Profil eingesetzte Nutenstein nach Zusammenfügen von Schraubplatte und Halteplatte in die offene Nut hineinragt. Vorzugsweise ragt das Hakenprofil in die Haltenut hinein bzw. erstreckt sich in dieser Haltenut zumindest teilweise.

Im zusammengebauten Zustand sind Halteplatte und Schraubplatte benachbart sowie parallel zueinander angeordnet. Durch das Befestigungsmittel kann der Nutenstein nicht mehr aus der offenen Nut der Schraubplatte herausbewegt werden. Auf diese Weise sind Halteplatte und Schraubplatte fest miteinander verbunden.

Die Schraubplatte des erfindungsgemäßen Haltesystems kann zur Befestigung an verschiedenen Elementen und Teilen dienen. Bevorzugte Ausgestaltungen sind nachstehend unter a) bis d) erläutert.
a) Dient die Schraubplatte des erfindungsgemäßen Haltesystems zur Befestigung an einem Halteelement bzw. ist sie dazu geeignet, dann stellt das Halteelement vorzugsweise eine Halteschiene für ein Wandelement dar. Diese Halteschiene ist mit einem ihrer horizontalen Enden zwischen und vorzugsweise mittig zwischen den beiden horizontalen Enden der Schraubplatte sowie im Wesentlichen und vorzugsweise senkrecht zur Schraubplatte mit dieser Schraubplatte verbunden. Anders ausgedrückt, eine der Stirnseiten der Halteschiene ist mit der Schraubplatte verbunden.
   Diese Ausführungsform ist insbesondere dann von Vorteil, wenn es sich bei dem Wandelement um eine Trennwand zwischen zwei mit Hilfe von Wandelementen gebildeten Sanitärräumen, beispielsweise für eine Toilette, handelt.
b) Ist die Schraubplatte zur Befestigung an einer Wand geeignet, dann ist sie an einem horizontalen Ende in einem Winkel von <180° mit einer Wandbefestigung verbunden.
   Diese Ausführungsform dient insbesondere dazu, eine Frontwand einer Kabine mit einer seitlichen gemauerten Wand oder ähnlichem zu verbinden.
c) Nach einer weiteren bevorzugten Ausführungsform ist die Schraubplatte in zwei Abschnitte unterteilt, die miteinander einen Winkel von <180° bilden.
   Diese Ausführungsform kommt insbesondere dann zum Einsatz, wenn die Schraubplatte zur Halterung sowohl eines Front-Wandelementes als auch eines Seiten-Wandelementes dient.
   Der genannte Winkel von <180° (kleiner als 180°) beträgt vorzugsweise 120°-70° und insbesondere bevorzugt 90°.
d) Die Schraubplatte ist auch dazu geeignet, an einem Stützfuß und vorzugsweise auf einem Stützfuß befestigt zu werden.

Die Schraubplatte des erfindungsgemäßen Haltesystems kann somit sowohl auf einem Fußboden oder ähnlichem direkt aufgelegt werden. Soll ein Abstand zwischen dem unteren Rand der Schraubplatte und dem Fußboden vorhanden sein, dann kann die Schraubplatte mit Hilfe eines Stützfußes zum Fußboden beabstandet in die Betriebsposition gebracht werden.

Ist das erfindungsgemäße Haltesystem mit einer Halteschiene ausgestattet, dann wird diese Halteschiene bevorzugt an einem Stützfuß befestigt. Der Zweck dieser Ausführungsform besteht ebenfalls darin, einen Abstand zum Fußboden oder ähnlichem zu schaffen.

Ist die Halteschiene mit einem Stützfuß ausgestattet, dann ist dieser bevorzugt beabstandet von der Schraubplatte an der Halteschiene befestigt. Kommt eine Schraubplatte zum Einsatz, die an einem Stützfuß befestigt ist, dann befindet sich dieser Stützfuß ebenfalls vorzugsweise beabstandet von dem Seitenrand des Wandelements, zu dessen Halterung die Schraubplatte dient.

Die Beabstandung des Stützfußes von der Schraubplatte und/oder von dem Seitenrand eines Wandelementes führt dazu, dass ein Betrachter einer aus mehreren Wandelementen zusammengesetzten Sanitäreinheit den Stützfuß von außen nicht sehen kann, so dass ein optischer Schwebeeffekt der Wandelemente und somit des Trennwandsystems erzielt wird.

Die Halteplatte und auch die Schraubplatte sind im Betriebszustand im Wesentlichen senkrecht angeordnet. Die Plattenebene erstreckt sich somit im Wesentlichen senkrecht vom Fußboden nach oben.

Nach einer bevorzugten Ausführungsform stellt die Halteplatte ein längliches durchgehendes plattenförmiges bzw. streifenförmiges Profilelement dar. Die horizontale Länge der Halteplatte ist somit größer als die Breite dieses Profilelementes. Üblicherweise besitzt die Schraubplatte, die mit der Halteplatte zusammengesetzt werden soll, in etwa die gleiche Länge und die gleiche Höhe bzw. Breite.

Die Halteplatte und die Schraubplatte sind zweckmäßigerweise aus einem Metall, beispielsweise Aluminium gefertigt.

Die Querschnittsform des Nut-Profils der Halteplatte ist vorzugsweise derart form- und größenkongruent mit der Querschnittsform des Nutensteines, dass der Nutenstein im Nut-Profil verschiebbar ist.

Mit anderen Worten, die Größe der Querschnittsform des Nut-Profils der Halteplatte ist geringfügig größer als die Größe der Querschnittsform des Nutensteins, so dass der Nutenstein ohne Schwierigkeiten in Längsrichtung des Nut-Profils verschiebbar ist, jedoch nicht senkrecht zur Platte durch die Öffnung des Nut-Profils herausbewegt werden kann.

Es sind auch Ausführungsformen umfasst, bei denen der Nutenstein aus dem Nut-Profil durch Verdrehen des Nutensteines aus dem Nut-Profil herausbewegt werden kann. Zweckmäßigerweise sind die Nutensteine derart ausgebildet, das ein Herausbewegen aus der Öffnung des Nut-Profils senkrecht zur Plattenebene nicht möglich ist.

Das Nut-Profil und der Nutenstein besitzen vorzugsweise eine T-förmige Querschnittsform.

Die Halteplatte ist vorzugsweise mit zwei sich parallel in horizontaler Richtung erstreckenden Trägern mit einem T-förmigen Querschnitt ausgestattet. Die Füße dieser T-Form, die durch das untere Ende des zum Querbalken senkrechten Balkens der T-Form gebildet werden, sind an der Halteplatte befestigt. Mit anderen Worten, die Balken der T-Form erstrecken sich beginnend von der Halteplatte senkrecht dazu.

Die Länge der Balken der T-Form ist im Wesentlichen die gleiche. Die zueinander zeigenden Enden der Querbalken der T-Form sind beabstandet. Durch diesen Abstand wird die Öffnung des Nut-Profils gebildet, durch die sich der aus dem Nut-Profil herausragende Teil des Nutensteines hindurch erstreckt. Die Dicke des Nutensteins in diesem Bereich ist somit geringfügig kleiner als der Abstand der zueinander zeigenden Enden der Querbalken der T-Form der beiden Träger der Halteplatte.

Besitzt der Nutenstein eine T-förmige Querschnittsform, dann befindet sich der Querbalken dieser T-Form innerhalb des Nut-Profils, während der zum Querbalken senkrechte Balken den aus dem Nut-Profil herausragenden Teil des Nutensteines darstellt. Im eingebauten Zustand ist der Querbalken in etwa senkrecht angeordnet, während sich der dazu senkrechte Balken horizontal erstreckt.

Der Nutenstein wird mit einem geeigneten Befestigungsmittel mit der Schraubplatte fest verbunden. Da der Nutenstein in dem Nut-Profil angeordnet ist, erfolgt darüber auch eine Befestigung der Halteplatte

Nach einer bevorzugten Ausführungsform besitzt der Nutenstein eine Gewindebohrung, in die eine Gewindeschraube eingeschraubt bzw. einschraubbar ist, die sich durch eine Durchgangsbohrung in der Schraubplatte hindurch in die Gewindebohrung erstreckt und die an der der Halteplatte abgewandten Seite der Schraubplatte abgestützt ist.

Diese Elemente stellen eine bevorzugte Ausführungsform der Befestigungsmittel dar, mit denen der Nutenstein mit der Halteplatte ortsfest verbunden werden kann.

Die Durchgangsbohrung in der Schraubplatte erstreckt sich vorzugsweise durch den Boden der zur Halteplatte hin offenen Nut. Die Gewindebohrung im Nutenstein befindet sich vorzugsweise in demjenigen Bereich, in dem der Nutenstein in die offene Nut hineinragt. Bei dieser Gewindebohrung kann es sich um eine Sackbohrung oder auch um eine durchgehende Gewindebohrung handeln.

Vorzugsweise sind bei dem erfindungsgemäßen Haltesystem zwei Nutensteine pro Halteplatte vorhanden, zwischen denen sich vorzugsweise ein in das Nut-Profil der Halteplatte eingesetztes sowie darin verschiebbares Distanzplättchen befindet bzw. dort angeordnet ist. Die Funktion dieses Distanzplättchens wird nachstehend näher erläutert.

Mit dem erfindungsgemäßen Haltesystem können somit mehrere Wandelemente zu einem Trennwandsystem zusammengefügt werden. Gegenstand der Erfindung ist somit auch ein Trennwandsystem für den sanitären Bereich mit mehreren Wandelementen, das dadurch gekennzeichnet ist, dass die Wandelemente mit dem erfindungsgemäßen Haltesystem mit mehreren Schraubplatten und Halteplatten im gewünschten Betriebszustand gehaltert werden.
Als Material für die Wandelemente und somit als Plattenmaterial kann Glas, Metall, Kombination aus Metall und Kunststoff, Mineralwerkstoff und aus Holz bzw Holz-Kunststoff eingesetzt werden.

Die Erfindung wird nachstehend anhand skizzenartiger, nicht maßstabsgetreuer Zeichnungen näher erläutert.

Von den Figuren zeigen:
- Fig.1: eine perspektivische Ansicht eines aus mehreren Wandelementen zusammengesetzten Trennwandsystems für zwei Sanitärkabinen, die jeweils mit einer Tür verschlossen sind, wobei die Wandelemente mittels des erfindungsgemäßen Haltesystems gehaltert bzw. befestigt sind,
- Fig.2: eine perspektivische Ansicht, teilweise in Explosionsdarstellung, eines erfindungsgemäßen Haltesystems mit einer Schraubplatte und einer Halteplatte,
- Fig.3: eine der Fig. 2 analoge Ansicht, jedoch ohne Halteplatte,
- Fig. 4: eine perspektivische Ansicht, teilweise in Explosionsdarstellung, eines erfindungsgemäßen Haltesystems aus einer Halteplatte und einer Schraubplatte zur Befestigung an einer Wand,
- Fig. 5: eine perspektivische Ansicht, teilweise in Explosionsdarstellung, eines erfindungsgemäßen Haltesystems aus zwei Halteplatten und einer gewinkelten Schraubplatte zur Eckverbindung eines seitlichen Wandelementes und eines Front-Wandelementes, und
- Fig. 6: eine perspektivische Ansicht, teilweise in Explosionsdarstellung, eines Haltesystems aus einer Schraubplatte und einer Halteplatte, wobei diese Platten zur Befestigung eines Randelementes im oberen Bereich dienen.

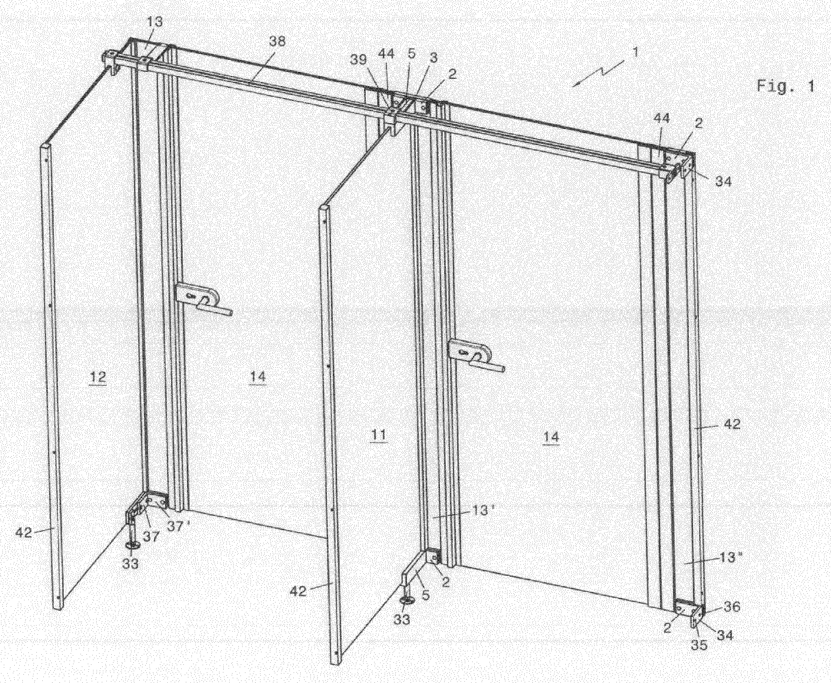

In der Fig. 1 sind verschiedene Wandelemente in perspektivischer Darstellung von innen her gezeigt. Diese Wandelemente sind Bestandteile eines Trennwandsystems 1 zur Umgrenzung und Abschirmung nach außen von zwei Kabinen für sanitäre Zwecke. Die beiden Kabinen sind durch ein Wandelement in Form einer Zwischenwand 11 voneinander getrennt. Die linke Kabine ist nach außen hin durch ein Wandelement in Form einer Seitenwand 12 abgeschirmt. Das in der Fig. 1 gezeigte Trennwandsystem dient zum Einbau in den Eckbereich eines Raumes (nicht gezeigt).

Das Trennwandsystem 1 ist mit insgesamt drei Wandelementen in Form einer Frontwand 13,13' und 13" ausgestattet. Zwischen den Frontwänden 13' und 13" einerseits und 13' und 13 andererseits ist jeweils eine Tür 14 angebracht. Dieses Trennwandsystem 1 ist mit Hilfe der Zwischenwand 11, der Seitenwand 12 und der Frontwand 13' an den nicht gezeigten Wänden des Raumes befestigt. Zur Halterung der Wandelemente 11,12,13,13' und 13" dient das erfindungsgemäße Haltesystem.

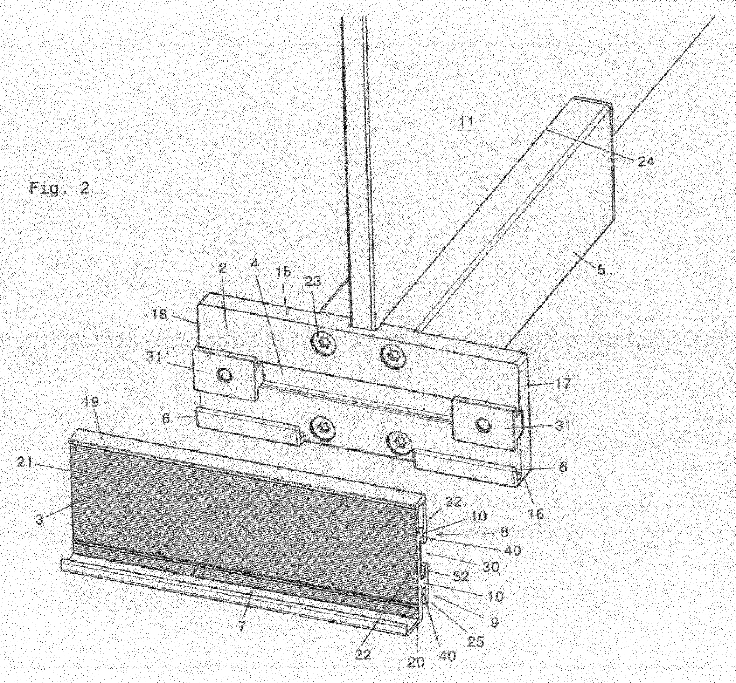

Das Haltesystem, das für die Frontwand 13' in der Fig. 1 zum Einsatz kommt, ist in der Fig. 2 näher dargestellt. Die dort gezeigte Schraubplatte 2 und Halteplatte 3 stellen jeweils längliche, in Aufsicht rechteckige Platten dar und bilden flache Quader. Die horizontalen Seitenränder 15,16 der Schraubplatte 2 sind länger als die senkrechten Seitenränder 17,18 der Schraubplatte 2.

Analoges gilt für die Halteplatte 3. Die horizontalen Seitenränder 19,20 der Halteplatte 3 sind gleich lang und länger als der senkrechte Seitenrand 21 und der senkrechte Seitenrand 22 der Halteplatte 3. Die Länge der Seitenränder 19 und 20 entspricht der Länge der Seitenränder 15 und 16 der Schraubplatte 2. Die Länge der Seitenränder 19 und 20 kann jedoch gewünschtenfalls auch größer oder kleiner sein als die Länge der Seitenränder 15 und 16 der Schraubplatte 2.

Bei dieser Ausrichtung der Halteplatte 3 stellt der horizontale Seitenrand 19 den oberen Seitenrand dar, während der horizontale Seitenrand 20 den unteren Seitenrand bildet. Bei der Schraubplatte 2 stellt der horizontale Seitenrand 15 den oberen Seitenrand dar, während der horizontale Seitenrand 16 den unteren Seitenrand bildet.

Die Schraubplatte 2 besitzt eine zur Halteplatte 3 hin offene, horizontale bzw. in Längsrichtung verlaufende Nut 4, die an beiden Enden und somit an den Seitenrändern 17,18 offen ist.

Auf der der Nut 4 gegenüberliegenden Seite ist die Schraubplatte 2 mit einer Halteschiene 5 verbunden, die sich senkrecht zur Schraubplatte 2 erstreckt.

Die Halteschiene 5 ist an ihrer vorderen Stirnseite mit Hilfe von Schrauben 23 fest mit der Schraubplatte 2 im mittleren Bereich davon verbunden. Mittig in der Halteschiene 5 befindet sich eine in Längsrichtung davon erstreckende, nach oben hin offene Nut 24, in die ein Wandelement eingesetzt ist, bei dem es sich um die Zwischenwand 11 gemäß Fig. 1 handelt.

Am einem der Seitenränder 15, 16, nämlich am Seitenrand 16, besitzt die Schraubplatte 2 zwei Bereiche einer im Querschnitt im Wesentlichen U-förmigen Haltenut 6. Dieser Seitenrand 16 stellt bei der in der Fig. 2 gezeigten Anordnung den unteren Seitenrand 16 dar. Die Haltenut 6 weist somit zwei Bereiche auf und erstreckt sich horizontal. Im Bereich der Schrauben 23 ist die Haltenut 6 nicht verwirklicht.

Die Halteplatte 3 besitzt auf der von der Schraubplatte 2 abgewandten Seite eine durchgehende, sich an einem der horizontalen Seitenränder 19,20, nämlich am Seitenrand 20, bei dem es sich in der Fig. 2 gezeigten Anordnung um den unteren Seitenrand 20 handelt, horizontal erstreckende Aufnahmenut 7 mit im Wesentlichen U-förmigen Querschnitt. In diese untere Aufnahmenut 7 wird der untere horizontale Seitenrand eines Wandelements (hier des Front-Wandelements 13') eingesetzt. Dieses Wandelement ist jedoch nicht gezeigt. Dieses Front-Wandelement wird zweckmäßigerweise werksmäßig mit der Halteplatte 3 verbunden, beispielsweise durch Verkleben des Plattenmaterials des Wandelements mit der Halteplatte 3.

Auf der der Aufnahmenut 7 gegenüberliegenden Seiten ist die Halteplatte 3 mit zwei sich parallel in horizontaler Richtung erstreckenden Trägern mit T-förmigem Querschnitt, nämlich einem ersten Träger 8 und einem zweiten Träger 9, ausgestattet. Bei der in der Figur 2 dargestellten Anordnung ist der erste Träger 8 der obere Träger, während der zweite Träger 9 den unteren Träger bildet.

Diese T-Form des T-förmigen Querschnitts besitzt einen Querbalken 32 sowie einen mittig sowie senkrecht zum Querbalken 32 angeordneten Balken 40.

Die Balken 40 der beiden Träger 8,9 sind gleich lang. Der Fuß der T-Form und somit das untere Ende des senkrechten Balkens 40 der T-Form der Träger 8,9 ist mit der Halteplatte 3 verbunden. Die zueinander zeigenden Enden der Querbalken 32 der T-Form sind beabstandet und bilden den "Ausgang" eines Nut-Profils 30, das sich horizontal und somit in Längsrichtung der Halteplatte 3 erstreckt und an den beiden Seitenrändern 21,22 offen ist.

Das vom Ausgang des Nut-Profils abgewandte Ende des Querbalkens 32 des T-förmigen Querschnitts des Trägers 8 geht in einen weiteren zum Querbalken 32 senkrechten Abschnitt über und ist mit der Halteplatte 3 verbunden. Dadurch entsteht ein sich in Längsrichtung der Halteplatte 3 erstreckendes Hohlprofil mit im wesentlich rechteckigen Querschnitt. Dieser Abschnitt des Hohlprofils bildet den Seitenrand 19.

Der vom Ausgang des Nut-Profils abgewandte Ende des Querbalkens 32 des T-förmigen Querschnitts des Trägers 9 zeigt bei der in der Figur 2 dargestellten Ausgestaltung nach unten und bildet zusammen mit dem Balken 40 ein Hakenprofil 25, das im zusammengebauten Zustand in die Haltenut 6 der Schraubplatte 2 von oben her eingreift, worauf später noch näher eingegangen wird.

Das Nut-Profil 30, bei dem es sich hier um ein T-Nut-Profil handelt, dient zur Aufnahme von zwei Nutensteinen 31,31'. Deren Funktion wird ebenfalls nachstehend näher erläutert.

Die Schraubplatte 2 ist an der der Haltenut 6 gegenüberliegenden Seite mit einer Halteschiene 5 verbunden, die mit einer ihrer Stirnseiten mit Hilfe von Schrauben 23 mittig mit der Schraubplatte 2 verschraubt ist. Die Schrauben 23 erstrecken sich hier von derjenigen Seite, auf der sich die offene Nut 4 befindet, durch nicht gezeigte Bohrungen in der Schraubplatte 2 durch letztere hindurch und in die Halteschiene 5 hinein.

Die Halteschiene 5 besitzt eine nach oben hin offene Nut 24, in welche ein Wandelement in Form der Zwischenwand 11 eingesetzt ist.

Die Halteschiene 5 erstreckt sich nur über einen Abschnitt des unteren Randes der Zwischenwand 11, man vergleiche auch Fig. 1. Zwischen der Halteschiene 5 und einer bauseits vorhandenen, jedoch nicht gezeigten Wand ist der untere Seitenrand der Zwischenwand 11 nicht eingefasst. Die Reinigung und Desinfektion von den Wandelementen bzw. dem Plattenmaterial gestaltet sich daher einfacher und wirkungsvoller.

In der Fig. 2 ist die Halterung der Frontwand 13' im unteren Bereich (man vergleiche Fig. 1) gezeigt. Die Schraubplatte dient im Zusammenspiel mit der Halteschiene 5 auch zur Halterung der Zwischenwand 11 im unteren Bereich.

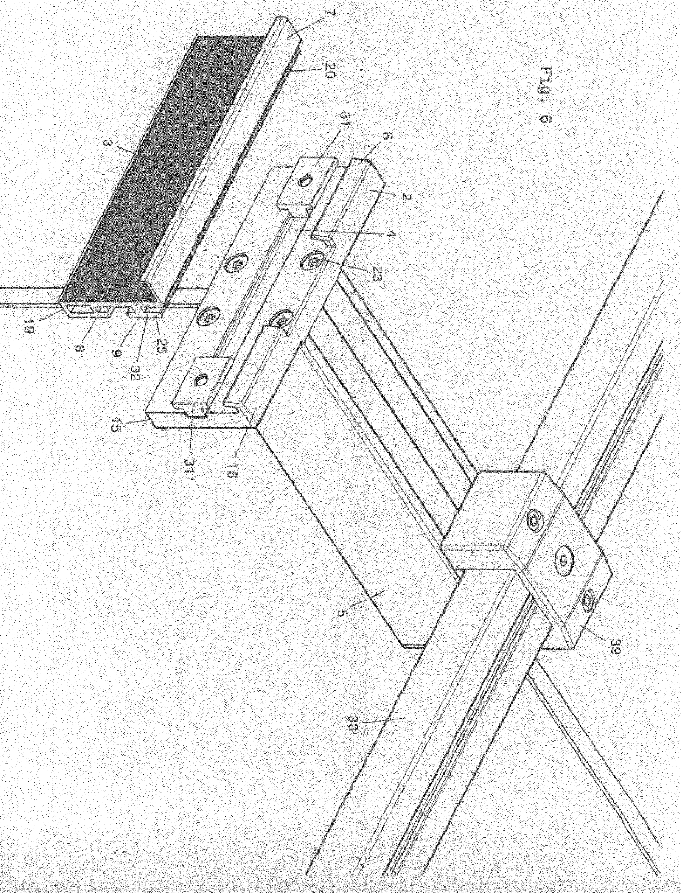

Die Situation im oberen Bereich der gleichen Frontwand 13' und Zwischenwand 11 ist in der Fig. 6 dargestellt. Die dort gezeigte Schraubplatte 2 und die ebenfalls dort gezeigte Halteplatte 3 entsprechen der Schraubplatte 2 bzw. Halteplatte 3 gemäß Fig. 2. Der Unterschied besteht lediglich darin, dass die Halteplatte 3 zur Befestigung an dem oberen horizontalen Seitenrand der in der Fig. 6 nicht gezeigten Frontwand 13' dient. Um dies zu ermöglichen, ist die Halteplatte 3 "umgedreht". Gleiches gilt für die Schraubplatte 2.

Der horizontale Seitenrand 15 der Schraubplatte 2 stellt den unteren Seitenrand dar, während der horizontale Seitenrand 16 der Schraubplatte 2 den oberen Seitenrand bildet. Der horizontale Seitenrand 19 der Halteplatte 3 stellt den unteren Seitenrand dar, während der horizontale Seitenrand 20 der Halteplatte 3 den oberen horizontalen Seitenrand bildet.

Die Aufnahmenut 7 der Halteplatte 3 ist bei dieser Anordnung nach unten hin offen bzw. zeigt nach unten. Analoges gilt für die Haltenut 6 der Schraubplatte 2.

Der erste Träger 8 der Halteplatte 3 bildet bei der in der Fig. 6 gezeigten Anordnung den unteren Träger, während der zweite Träger 9 den oberen Träger bildet. Der sich nach oben erstreckende Teil des Querbalkens stellt ein Hakenprofil 25 dar. Bei der in der Fig. 2 gezeigten Anordnung zeigt dieses Hakenprofil 25 nach unten.

Die Halteplatte 3 am oberen Seitenrand und die entsprechende Halteplatte 3 am unteren Seitenrand für die Frontwand 13' werden bereits werksmäßig miteinander verbunden. Zur Montage vor Ort wird dann die Frontwand 13' mit der oberen und unteren Halteplatte 3 von der Seite her in die untere und obere Schraubplatte 2 hineingeschoben oder von oben eingehakt, so dass das Hakenprofil 25 in die dazugehörige Haltenut 6 hineingeschoben wird. Des Weiteren kommen die in dem Nut-Profil 30 befindlichen Nutensteine 31,31' in der dazugehörigen jeweiligen offene Nut 4 zu liegen.

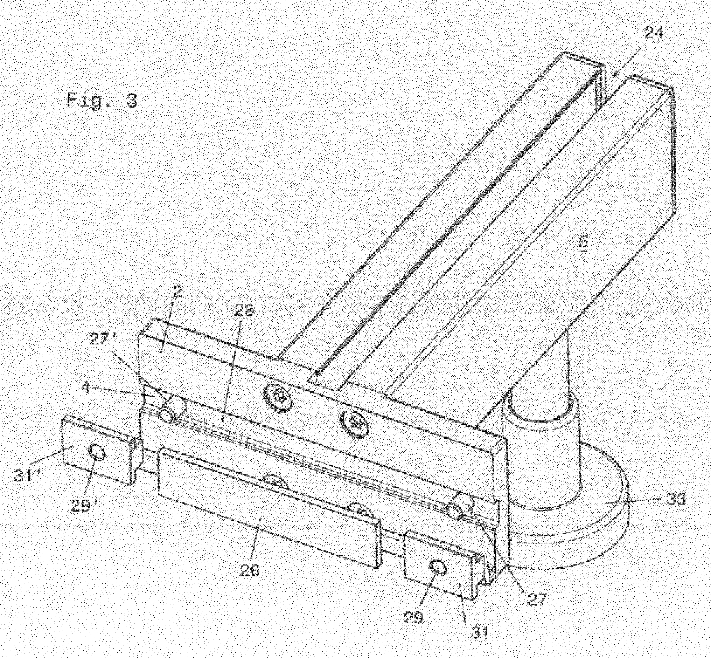

Zwischen den Nutensteinen 31,31' ist ein in der Figur 3 näher gezeigtes Distanzplättchen 26 im Nut-Profil 30 angeordnet. Verschiebt man einen der Nutensteine 31,31' in Längsrichtung des Nut-Profils 30, dann wird mittels des Distanzplättchens 26 auch der andere Nutenstein mit verschoben. Zugleich wird der Abstand festgelegt.

Zur Befestigung der Nutensteine 31,31' dienen Gewindeschrauben 27,27', die sich durch den Boden 28 der offenen Nut 4 der Halteplatte 2 durch entsprechende Durchgangsbohrungen hindurch (man vergleiche hierzu insbesondere Fig. 3) in Gewindebohrungen 29,29' in den Nutensteinen 31,31' erstrecken können.

Nach dem geschilderten seitlichen Einschieben oder dem Einhaken von oben her der oberen und unteren Halteplatte 3 in die dazugehörige obere und untere Schraubplatte 2 wird einer der Nutensteine 31,31' derart verschoben, dass die dazugehörige Gewindeschraube 27,27' in die Gewindebohrung 29,29' eingeschraubt werden kann. Durch das Distanzplättchen 26 befindet sich dann auch der andere Nutenstein in einer Position, in der die dazugehörige Gewindeschraube 27,27' in die damit korrespondierende Gewindebohrung 29,29' eingeschraubt werden kann. Die Gewindeschrauben 27,27' sind auf der der offenen Nut 4 gegenüberliegenden Seite der Schraubplatte 2 abgestützt und strecken sich durch diese hindurch in die dazugehörigen Nutensteine 31,31 '.

Nach "Festdrehen" der Gewindeschrauben 27,27' sind die obere und untere Schraubplatte 2 mit der dazugehörigen oberen bzw. unteren Halteplatte 3 verbunden. Außerdem wird dadurch die Frontwand 13' gehaltert.

Bei diesem Trennwandsystem 1 wurde die Halteschiene 5 auf einem höhenverstellbaren Stützfuß 33 montiert, man vergleiche auch Fig. 3. Dieser Stützfuß 33 ist von der unteren Halteplatte 2 beabstandet angeordnet.

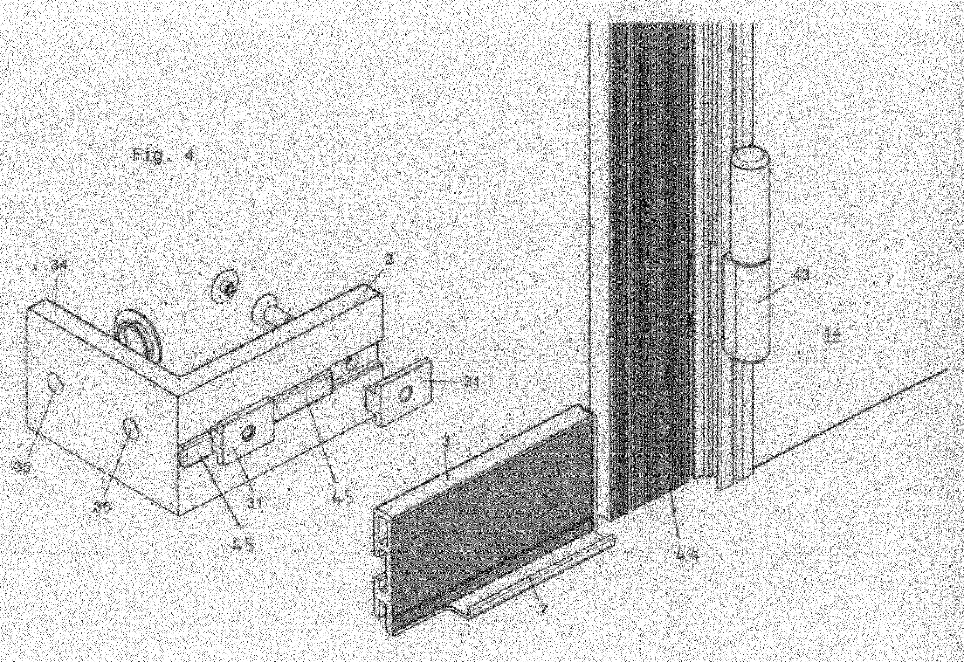

Um die in der Fig. 1 gezeigte Frontwand 13" mit einer dort nicht gezeigten bauseitigen Wand zu befestigen, dienen die in der Fig. 4 gezeigten Halteplatte 3 und Schraubplatte 2.

Schraubplatte 2 und Halteplatte 3 sind dabei ähnlich aufgebaut wie die in den Figuren 3 und 6 gezeigten Schraubplatten 2 und Halteplatten 3. Ein Set aus Halteplatte 3 und Schraubplatte 2 wird zur Befestigung am unteren Seitenrand der Frontwand 13" eingesetzt, während der andere Set aus Halteplatte 3 und Schraubplatte 2 am oberen Seitenrand der Frontwand 13" zum Einsatz kommt, jedoch in "umgedrehter" Anordnung.

Ein Unterschied besteht darin, dass die Schraubplatte 2 dafür geeignet ist, an einer Wand befestigt zu werden. Zu diesem Zweck ist die Schraubplatte 2 an einer Stirnseite (in der Fig. 4 links) mit einer Befestigungsplatte 34 verbunden. Bei der gezeigten Ausführungsform ist die Schraubplatte 2 mit dieser Befestigungsplatte 34 einstückig ausgebildet. Schraubplatte 2 und Befestigungsplatte 34 bilden einen Winkel. Die Befestigungsplatte 34 ist mit Bohrungen 35,36 versehen durch die hindurch sich Befestigungsmittel, beispielsweise Schrauben, erstrecken können, um die Befestigungsplatte 34 mit der Wand fest zu verbinden.

Ein weiterer Unterschied besteht darin, dass die Schraubplatte 2 keine Haltenut 6 besitzt, um zu vermeiden, dass unterschiedliche linksrechts-Teile für oben und unten benötigt werden. Die Nutensteine 31,31' sind an der Schraubplatte 2 vormontiert. Das Wandelement 33" wird von der Seite her eingeschoben. Für die Positionierung zur Halteplatte 3 hat die Schraubplatte 2 zwei erhabene Rippen 45 in der Mitte der Anlagefläche. Die Breite der Rippen 45 ist auf die Breite des Nut-Profil 30 abgestimmt.

Allerdings ist es durchaus möglich, eine Schraubplatte 2 mit einer Haltenut 6 einzusetzen.

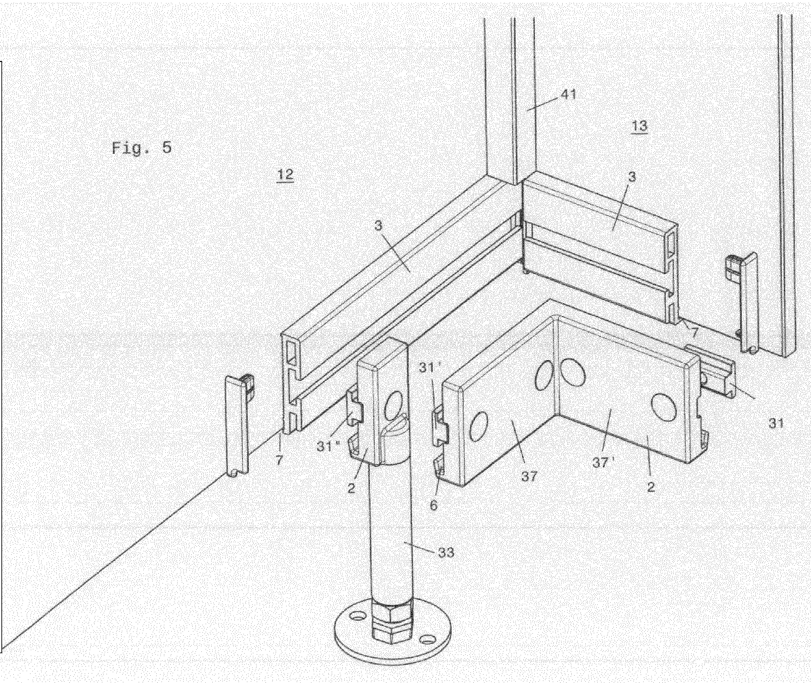

Das in der Fig. 5 gezeigte Haltesystem dient zur Halterung einer Seitenwand 12 und eines senkrecht dazu angeordneten Front-Wandelementes 13.

Seitenwand 12 und Front-Wandelement 13 sind mit jeweils einer wie oben beschriebenen Halteplatte 3 verbunden. Dazu liegen Bereiche des unteren Seitenrandes der Seitenwand 12 und der Frontwand 13 in der entsprechenden Aufnahmenut 7 der dazugehörigen Halteplatte 3. Die Halteplatten 3 sind im Übrigen im Eckbereich von Seitenwand 12 und Frontwand 13 angeordnet. Zur Halterung dieser beiden Halteplatten 3 dient eine Schraubplatte 2, die in zwei Abschnitte unterteilt ist, wobei die beiden Abschnitte 37,37' einen Winkel von 90° bilden und an ihren zueinander zeigenden Stirnseiten aneinander und miteinander befestigt sind bzw einstückig ausgebildet sind.

Zur Abstützung der Seitenwand 12 dient eine weitere Schraubplatte 2, die auf einem Stützfuß 33 montiert ist. Diese Schraubplatte 2 erstreckt sich nur über eine kurze horizontale Wegstrecke.

Die Halteplatte 3 für die Seitenwand 12 wird mit zwei Schraubplatten 2 verbunden. So wird der Abschnitt 37 der Schraubplatte 2 und auch die auf dem Stützfuß 33 befestigte Schraubplatte 2 mit der Halteplatte 3 der Seitenwand 12 verbunden. Dazu dienen insgesamt drei Nutensteine, von denen in der Fig. 5 nur die Nutensteine 31' und 31" gezeigt sind.

Zur Befestigung der Frontwand 13 über die dazugehörige Halteplatte 3 dient der Abschnitt 37' der Schraubplatte 2. Dieser Abschnitt 37' wird mit der Halteplatte 3 über zwei Nutensteine verbunden, von denen in der Fig. 5 nur der Nutenstein 31 gezeigt ist.

Der Stützfuß 33 dient im Zusammenwirken mit der dazugehörigen Schraubplatte 2 dazu, nicht nur die Schraubplatte 2 der Seitenwand 12 sondern auch die Halteplatte 3 der Frontwand 13 vom Fußboden beabstandet zu halten. Zudem gewährleistet die winkelartige Schraubplatte 2 mit ihren beiden Abschnitten 37,37', dass Seitenwand 12 und Frontwand 13 in einem Winkel von etwa 90° zueinander gehaltert werden.

Zur Stabilisierung der Seitenwand 12 und der Zwischenwand 11 dient eine in der Figur 6 gezeigte Querzarge 38, die an der Zwischenwand 11 mittels der oberen Halteschiene 5 verbunden ist. Dazu dient ein bogenförmiges Element 39, das die Querzarge 38 übergreift und mit der Halteschiene 5 verbindet. An den beiden Enden der Querzarge 38, die in etwa stabförmig ausgebildet ist, wird diese Querzarge 38 entweder an der bauseitigen Wand oder direkt an dem oberen Seitenrand der Seitenwand 12 befestigt.
Die zueinander zeigenden senkrechten Seitenränder der Seitenwand 12 und der Frontwand 13 sind oberhalb der Halteplatten 3 mit einem Längsprofil 41 (in Figur 5 gezeigt) miteinander verbunden.
Die senkrechten, zur bauseitigen Wand zeigenden Seitenräder der Zwischenwand 11 und der Seitenwand 12 sind an dieser bauseitigen Wand mittels eines per se bekannten Wandprofils 42 (Figur 1) befestigt.
Die Halteplatten 3 besitzen auf derjenigen Seite, auf der sich die Aufnahmenut 7 befindet, eine wellenartige Oberfläche bzw. Struktur. Diese Oberfläche wird mit dem dazugehörigen Wandelement 11,12,13, 13' und 13" verklebt. Bei diesem Kleber handelt es sich zweckmäßigerweise um 2-Komponenten-Silikon.
Zwischen dem Front-Wandelement 13" und dem Front-Wandelement 13' einerseits und dem Front-Wandelement 13' und dem Front-Wandelement 13 andererseits ist jeweils ein Tür 14 angeordnet. Die Türen 14 sind über ein Scharnier 43 (man vergleiche insbesondere Figur 4) an einem senkrechten, in etwa streifenförmigen Profilelement 44 angelenkt, dessen Oberfläche ebenfalls wellenartig ausgebildet ist. Dieses Profilelement 44 wird ebenfalls mit dem dazugehörigen Wandelement 11,12,13,13' und 13" verklebt, wobei dies schon werkseitig erfolgen kann. Das Wandelement verbindet somit Schraubplatte 2/Halteplatte 3 mit dem Profilelement 44 und darüber mit der Tür 14.
Bezogen auf die in der Figur 4 gezeigte Anordnung bedeutet dies beispielsweise, dass die Breite der Frontwand 13" in etwa so breit ist wie die Summe der Breiten von Halteplatte 3 und Profilelement 44. Halteplatte 3 sowie das senkrechte Profilelement 44 werden nebeneinander liegend im unteren Bereich auf die Rückseite des Wandelements 13" geklebt. Gleiches gilt für den oberen Bereich, wobei die Halteplatte 3 jedoch "umgedreht" ist. Die Einheit aus zwei Halteplatten 3, einem senkrechten Profilelement 44 und dem Wandelement 13" wird auf die beiden an einer bauseitigen Wand befestigten Schraubplatten 2 seitlich aufgeschoben und damit verbunden. Anschließend wird die Tür 14 über das Profilelement 44 mittels des Scharniers 43 an dieser Einheit angelenkt. Diese Einheit schwebt über dem Fußboden, der dadurch auf einfache Weise gereinigt werden kann.
Analoges gilt für die Befestigung des senkrechten Profilelements 44 im Bereich der Frontwand 11.

Zudem wird, wobei dies nicht zwingend erforderlich sondern bevorzugt ist, der freie senkrechte Seitenrand der Frontwand 13" mit Hilfe eines Wandprofils 42 an der bauseitigen Wand (nicht gezeigt) befestigt.

Auf diese Weise kann ein Trennwandsystem 1 gemäß der Fig. 1 nach und nach aufgebaut werden. Dieses Trennwandsystem wird auf dem Fußboden lediglich durch die beiden Stützfüße 33 abgestützt. Weitere Elemente liegen auf dem Fußboden nicht auf.

### Bezugszeichenliste

- 1: Trennwandsystem
- 2: Schraubplatte
- 3: Halteplatte
- 4: offene Nut
- 5: Halteschiene
- 6: Haltenut
- 7: Aufnahmenut
- 8: erster Träger
- 9: zweiter Träger
- 10: Balken
- 11: Wandelement in Form einer Zwischenwand
- 12: Wandelement in Form einer Seitenwand
- 13,13',13": Wandelement in Form einer Frontwand
- 14: Tür
- 15: horizontaler Seitenrand der Schraubplatte 2
- 16: horizontaler Seitenrand der Schraubplatte 2
- 17: senkrechter Seitenrand der Schraubplatte 2
- 18: senkrechter Seitenrand der Schraubplatte 2
- 19: horizontaler Seitenrand der Halteplatte 3
- 20: horizontaler Seitenrand der Halteplatte 3
- 21: senkrechter Seitenrand der Halteplatte 3
- 22: senkrechter Seitenrand der Halteplatte 3
- 23: Schrauben für Halteschiene 5
- 24: Nut in der Halteschiene 5
- 25: Hakenprofil
- 26: Distanzplattchen
- 27,27': Gewindeschraube
- 28: Boden
- 29: Gewindebohrung
- 30: Nut-Profil
- 31,31',31": Nutenstein
- 32: Querbalken der T-Form der Träger 8,9
- 33: Stützfuß
- 34: Befestigungsplatte
- 35: Bohrung
- 36: Bohrung
- 37,37': Abschnitthalteplatte
- 38: Querzarge
- 39: bogenförmiger Riegel
- 40: Balken der T-Form
- 41: Längsprofil
- 42: Wandprofil
- 43: Scharnier
- 44: senkrechtes streifenförmiges Profilelement
- 45: erhabene Rippe

## Patentansprüche

1. Haltesystem für Wandelemente im sanitären Bereich, insbesondere für Sanitärtrennwände,
mit mindestens einer in Aufsicht länglichen Schraubplatte (2), die zur Befestigung an einem Halteelement (5), an einer Wand, an einem Stützfuß (33), an einem weiteren Wandelement oder ähnlichem geeignet ist,
mit mindestens einer in Aufsicht länglichen Halteplatte (3), die zur dauerhaften Anbringung an einem Wandelement (11,12,13,13',13") sowie dazu geeignet ist, mit der Schraubplatte (2) fest verbunden zu werden, und
mit folgenden weiteren Merkmalen:
i) die Halteplatte (3) ist zumindest bereichsweise mit einem sich in Längsrichtung erstreckenden Nut-Profil (30) ausgestattet,
ii) in das Nut-Profil (30) ist mindestens ein Nutenstein (31,31',32") eingesetzt,
iii) die Querschnittsform des Nut-Profils (30) und des Nutensteines (31,31',31") sind derart ausgebildet, dass der Nutenstein (31,31',31") in Längsrichtung des Nut-Profils (30) darin verbleibend verschiebbar ist und aus dem Nut-Profil (30) herausragt,
iv) die Schraubplatte (2) ist zumindest bereichsweise mit einer sich in Längsrichtung erstreckenden, zur Halteplatte (3) hin offenen Nut (4) ausgestattet, in welche der aus dem Nut-Profil (30) herausragende Teil des Nutensteines (31,31',31") geeignet ist, hinein zu ragen,
v) der Teil des Nutensteines (31,31',31"), der geeignet ist, in die offenen Nut (4) hineinzuragen, ist in Längsrichtung der offenen Nut (4) darin verschiebbar, und
vi) mindestens ein Befestigungsmittel (27,27') ist vorgesehen, das geeignet ist, den Nutenstein (31,31',31") mit der Schraubplatte (2) ortsfest zu verbinden,
**gekennzeichnet durch** folgende Merkmale:
vii) die Halteplatte (3) ist an einem ihrer Seitenränder (19,20) oder in der Nähe davon, jedoch auf der dem Nut-Profil (30) gegenüberliegenden Seite zumindest bereichsweise derart mit einer im Querschnitt U-förmigen Aufnahmenut (7) für ein Wandelement (11,12,13,13',13") ausgestattet, dass sich der Boden (28) der U-Form in Längsrichtung erstreckt und die Öffnung der U-Form zur Mitte der Halteplatte (3) zeigt,
viii) die Halteplatte (3) besitzt zwischen dem Nut-Profil (30) und demjenigen ihrer Seitenränder (19,20), an dem die Aufnahmenut (7) vorgesehen ist, zumindest bereichsweise ein sich in Längsrichtung erstreckendes Hakenprofil (25),
ix) die Schraubplatte (2) ist an einem ihrer Seitenränder (15,16) zumindest bereichsweise derart mit einer im Querschnitt U-förmigen Haltenut (6) ausgestattet, dass sich der Boden der U-Form der Haltenut (6) in Längsrichtung erstreckt und die Öffnung der U-Form zur Mitte der Schraubplatte (2) zeigt, und
x) die Halteplatte (3) ist geeignet, mit dem Hakenprofil (25) in die Haltenut (6) der Schraubplatte (2) einzugreifen.

2. Haltesystem nach Anspruch 1,
**dadurch gekennzeichnet, dass**
die Schraubplatte (2)
a) die zur Befestigung an dem Halteelement geeignet ist, zwischen den beiden Enden der Schraubplatte (2) mit einer Halteschiene (5) für ein Wandelement (11) verbunden ist, und zwar derart, dass die Halteschiene (5) mit einem ihrer Enden mit dieser Schraubplatte (2) verbunden ist, oder
b) die zur Befestigung an der Wand geeignet ist, an einem Ende in einem Winkel von kleiner 180° mit einer Wandbefestigung (34) verbunden ist, oder
c) in zwei Abschnitte (37,37') unterteilt ist, die miteinander einen Winkel von kleiner 180° bilden, oder
d) an dem Stützfuß (33) befestigt ist.

3. Haltesystem nach Anspruch 2, **dadurch gekennzeichnet, dass** die Halteschiene (5) an einem Stützfuß (33) befestigt ist.

4. Haltesystem nach Anspruch 3,
**dadurch gekennzeichnet, dass**
der mit der Halteschiene (5) verbundene Stützfuß (33) beabstandet von der Schraubplatte (2) an der Halteschiene (5) befestigt ist.

5. Haltesystem nach einem der vorhergehenden Ansprüche,
**dadurch gekennzeichnet, dass**
die Halteplatte (3) ein längliches durchgehendes Profilelement darstellt.

6. Haltesystem nach einem der vorhergehenden Ansprüche,
**dadurch gekennzeichnet, dass**
die Querschnittsform des Nut-Profils (30) der Halteplatte (3) derart form- und größenkongruent mit der Querschnittsform des Nutensteins (31,31',31") ist, dass der Nutenstein (31,31',31") im Nut-Profil (30) verschiebbar ist.

7. Haltesystem nach Anspruch 6,
**dadurch gekennzeichnet, dass**
das Nut-Profil (30) und der Nutenstein (31,31',31") eine T-förmige Querschnittsform besitzen.

8. Haltesystem nach Anspruch 7,
**dadurch gekennzeichnet, dass**
die Halteplatte (3) mit zwei sich parallel in Längsrichtung erstreckenden Trägern (8,9) mit einem T-förmigen Querschnitt ausgestattet ist,
die Füße der T-Form, die durch das untere Ende des senkrechten Balkens (10) der T-Form gebildet werden, an der Halteplatte (3) befestigt sind,
die Länge der senkrechten Balken (10) der T-Form im Wesentlichen gleich ist, die zueinander zeigenden Enden der Querbalken (32) der T-Form beabstandet sind und der zu demjenigen Seitenrand, an dem die Aufnahmenut ausgebildet ist, zeigende Abschnitt des Querbalkens (32) das Hakenprofil (25) bildet.

9. Haltesystem nach einem der vorhergehenden Ansprüche,
**dadurch gekennzeichnet, dass**
der Nutenstein (31,31',31") eine Gewindebohrung (29) besitzt, in die eine Gewindeschraube (27,27') eingeschraubt ist, die sich durch eine Durchgangsbohrung in der Schraubplatte (2) hindurch in die Gewindebohrung (29) erstreckt und an der der Halteplatte (3) abgewandten Seite der Schraubplatte (2) abgestützt ist.

10. Haltesystem nach einem der vorhergehenden Ansprüche,
**dadurch gekennzeichnet, dass**
zwei Nutensteine (31,31',31") vorhanden sind, zwischen denen ein in dem Nut-Profil (30) der Halteplatte (3) verschiebbares Distanzplättchen (26) angeordnet ist.

11. Trennwandsystem für den sanitären Bereich mit mehreren Wandelementen (11,12,13,13',13"), **dadurch gekennzeichnet, dass** die Wandelemente (11,12,13,13', 13") mit dem Haltesystem nach einem der vorhergehenden Ansprüche mit mehreren Schraubplatten (2) und Halteplatten (3) im gewünschten Betriebszustand gehaltert werden.

## Claims

1. Holding system for wall elements in the sanitary field, in particular for sanitary partitions,
having at least one screw plate (2) that is oblong in a top view and is adapted for being fixed to a holding element (5), to a wall, to a support leg (33), to a further wall element or similar,
having at least one holding plate (3) that is oblong in a top view and is adapted for being permanently mounted to a wall element (11, 12, 13, 13', 13") as well as for being rigidly connected to the screw plate (2), and
having the following further features:
i) the holding plate (3) is equipped at least in some areas with a slot profile (30) extending in the longitudinal direction,
ii) at least one slot nut (31, 31', 31") is inserted in the slot profile (30),
iii) the cross-sectional shapes of the slot profile (30) and the slot nut (31, 31', 31") are formed such that the slot nut (31, 31', 31") is displaceable in the longitudinal direction of the slot profile (30) while remaining therein and protrudes out from the slot profile (30),
iv) the screw plate (2) is equipped at least in some areas with a slot (4) that is open toward the holding plate (3) and extends in the longitudinal direction, into which open slot the part of the slot nut (31, 31', 31") protruding out from the slot profile (30) is adapted to project,
v) the part of the slot nut (31, 31', 31") that is adapted to project into the open slot (4) is displaceable therein in the longitudinal direction of the open slot (4), and
vi) at least one fastening means (27, 27') is provided that is adapted to connect the slot nut (31, 31', 31") to the screw plate (2) in a stationary manner,
**characterized by** the following features:
vii)at one of its side edges (19, 20) or in the vicinity thereof, though at the side opposite the slot profile (30), the holding plate (3) is equipped at least in some sections with a receiving slot (7) of a U-shaped cross-section for a wall element (11, 12, 13, 13', 13") in such a manner that the bottom (28) of the U-shape extends in the longitudinal direction and the opening of the U-shape is directed toward the center of the holding plate (3),
viii) between the slot profile (30) and that edge of its side edges (19, 20), where the receiving slot (7) is provided, the holding plate (3) has at least in some areas a hook profile (25) extending in the longitudinal direction,
ix)at one of its side edges (15, 16), the screw plate (2) is equipped at least in some areas with a retaining slot (6) of a U-shaped cross section in such a manner that the bottom of the U-shape of the retaining slot (6) extends in the longitudinal direction and the opening of the U-shape is directed toward the center of the screw plate (2), and
x) the holding plate (3) is adapted to engage into the retaining slot (6) of the screw plate (2) by means of the hook profile (25).

2. Holding system according to claim 1,
**characterized in that**
the screw plate (2)
a) which is adapted for being fixed to the holding element, between the two ends of the screw plate 2, is connected to a support rail (5) for a wall element (11) in such a way that the support rail (5) is connected to said screw plate (2) by one of its ends, or
b) which is adapted for being fixed to the wall, is connected at one end at a angle of less than 180° to a wall fastening means (34), or
c) is divided in two sections (37, 37') which together form an angle of less than 180°, or
d) is fastened to the support leg (33).

3. Holding system according to claim 2, **characterized in that** the support rail (5) is fastened to a support leg (33).

4. Holding system according to claim 3,
**characterized in that**
the support leg (33) connected to the support rail (5) is fastened to the support rail (5) so as to be spaced apart from the screw plate (2).

5. Holding system according to anyone of the preceding claims,
**characterized in that**
the holding plate (3) constitutes an oblong continuous profile element.

6. Holding system according to anyone of the preceding claims,
**characterized in that**
the cross-sectional shape of the slot profile (30) of the holding plate (3) is congruent in shape and size to the cross-sectional shape of the slot nut (31, 31', 31") such that the slot nut (31, 31', 31") is displaceable in the slot profile (30).

7. Holding system according to claim 6,
**characterized in that**
the slot profile (30) and the slot nut (31, 31', 31") have a T-shaped cross-sectional shape.

8. Holding system according to claim 7,
**characterized in that**
the holding pate (3) is equipped with two beams (8, 9) extending in parallel in the longitudinal direction and having a T-shaped cross-section,
the feet of the T-shape that are formed by the lower end of the perpendicular bar (10) of the T-shape, are fastened to the holding plate (3),
the length of the perpendicular bars (10) of the T-shape is substantially equal, the ends of the cross bars (32) of the T-shape directed toward one another are spaced apart, and the section of the cross bar (32) directed toward that side edge where the receiving slot is formed, forms the hook profile (25).

9. Holding system according to anyone of the preceding claims,
**characterized in that**
the slot nut (31, 31', 31") has a threaded bore (29) into which a threaded bolt (27, 27') is screwed which extends through a through-bore in the screw plate (2) into the threaded bore (29) and is supported at the side o the screw plate (2) facing away from the holding plate (3).

10. Holding system according to anyone of the preceding claims,
**characterized in that**
two slot nuts (31, 31', 31") are present between which a small spacer lamella (26) is arranged to be displaceable in the slot profile (30) of the holding plate (3).

11. Partition system for the sanitary field having a plurality of wall elements (11, 12, 13, 13', 13"), **characterized in that** the wall elements (11, 12, 13, 13', 13") are held in the desired operative state by means of the holding system according to anyone of the preceding claims using a plurality of screw plates (2) and holding plates (3).

## Revendications

1. Système de retenue pour éléments de paroi dans le domaine des sanitaires, en particulier pour parois de séparation de sanitaires,
comprenant au moins une plaque à visser (2) longitudinale en vue de dessus qui est apte à être fixée à un élément de retenue (5), à une paroi, à un pied d'appui (33), à un élément de paroi supplémentaire ou similaire,
comprenant au moins une plaque de retenue (3) longitudinale en vue de dessus qui est apte à être apposée durablement à un élément de paroi (11, 12, 13, 13', 13") ainsi qu'à être fermement reliée à la plaque à visser (2), et
présentant les caractéristiques supplémentaires suivantes :
i) la plaque de retenue (3) est au moins par portion dotée d'un profil à rainure (30) s'étendant en direction longitudinale,
ii) au moins une clavette de rainure (31, 31', 31") est insérée dans le profil à rainure (30),
iii) la forme de section transversale du profil à rainure (30) et celle de la clavette de rainure (31, 31', 31") sont constituées de telle façon que la clavette de rainure (31, 31', 31") soit coulissable en direction longitudinale du profil à rainure (30) en demeurant dans celui-ci et dépasse du profil à rainure (30),
iv) la plaque à visser (2) est dotée au moins par portion d'une rainure (4) s'étendant en direction longitudinale, ouverte vers la plaque de retenue (3), dans laquelle la partie de la clavette de rainure (31, 31', 31") qui dépasse du profil à rainure (30) est apte à s'enfoncer,
v) la partie de la clavette de rainure (31, 31', 31") qui est apte à s'enfoncer dans la rainure (4) ouverte est coulissable dans celle-ci en direction longitudinale de la rainure (4) ouverte, et
vi) au moins un moyen de fixation (27, 27') qui est apte à relier de façon stationnaire la clavette de rainure (31, 31', 31") à la plaque à visser (2) est prévu,
**caractérisé par** les caractéristiques suivantes :
vii) au niveau d'un de ses bords latéraux (19, 20) ou à proximité de celui-ci, toutefois du côté opposé au profil à rainure (30), la plaque de retenue (3) est au moins par portion dotée d'une rainure de logement (7) en forme de U en section transversale pour un élément de paroi (11, 12, 13, 13', 13") de telle façon que le fond (28) de la forme de U s'étende en direction longitudinale et que l'ouverture de la forme de U soit tournée vers le milieu de la plaque de retenue (3),
viii) la plaque de retenue (3) présente au moins par portion, entre le profil à rainure (30) et celui de ses bords latéraux (19, 20) au niveau duquel la rainure de logement (7) est prévue, un profil à crochet (25) s'étendant en direction longitudinale,
ix) au niveau d'un de ses bords latéraux (15, 16), la plaque à visser (2) est dotée au moins par portion d'une rainure de retenue (6) en forme de U en section transversale de telle façon que le fond de la forme de U de la rainure de retenue (6) s'étende en direction longitudinale et que l'ouverture de la forme de U soit tournée vers le milieu de la plaque à visser (2), et
x) la plaque de retenue (3) est apte à s'engager avec le profil à crochet (25) dans la rainure de retenue (6) de la plaque à visser (2).

2. Système de retenue selon la revendication 1,
**caractérisé en ce que**
la plaque à visser (2)
a) qui est apte à être fixée à l'élément de retenue est reliée entre les deux extrémités de la plaque à visser (2) à un rail de retenue (5) pour un élément de paroi (11), et ce, de telle façon que le rail de retenue (5) soit relié par une de ses extrémités à cette plaque à visser (2), ou
b) qui est apte à être fixée à la paroi est reliée par une extrémité à une fixation de paroi (34) selon un angle inférieur à 180°, ou
c) est subdivisée en deux sections (37, 37') qui décrivent l'une avec l'autre un angle inférieur à 180°, ou
d) est fixée au pied d'appui (33).

3. Système de retenue selon la revendication 2, **caractérisé en ce que** le rail de retenue (5) est fixé à un pied d'appui (33).

4. Système de retenue selon la revendication 3,
**caractérisé en ce que**
le pied d'appui (33) relié au rail de retenue (5) est fixé au rail de retenue (5) à distance de la plaque à visser (2).

5. Système de retenue selon l'une des revendications précédentes,
**caractérisé en ce que**
la plaque de retenue (3) constitue un élément de profil continu longitudinalement.

6. Système de retenue selon l'une des revendications précédentes,
**caractérisé en ce que**
la forme de section transversale du profil à rainure (30) de la plaque de retenue (3) est congruente en termes de forme et de taille avec la forme de section transversale de la clavette de rainure (31, 31', 31") de telle façon que la clavette de rainure (31, 31', 31") soit coulissable dans le profil à rainure (30).

7. Système de retenue selon la revendication 6,
**caractérisé en ce que**
le profil à rainure (30) et la clavette de rainure (31, 31', 31") présentent une section transversale en forme de T.

8. Système de retenue selon la revendication 7,
**caractérisé en ce que**
la plaque de retenue (3) est dotée de deux porteurs (8, 9) s'étendant parallèlement en direction longitudinale et présentant une section transversale en forme de T,
les pieds de la forme de T, qui sont formés par l'extrémité inférieure de la poutre verticale (10) de la forme de T, sont fixés à la plaque de retenue (3),
la longueur des poutres verticales (10) de la forme de T est sensiblement égale, les extrémités tournées l'une vers l'autre des poutres transversales (32) de la forme de T sont espacées et la section de la poutre transversale (32) qui est tournée vers le bord latéral au niveau duquel est constituée la rainure de logement forme le profil à crochet (25).

9. Système de retenue selon l'une des revendications précédentes,
**caractérisé en ce que**
la clavette de rainure (31, 31', 31") présente un taraudage (29) dans lequel est vissée une vis filetée (27, 27') qui s'étend à travers un perçage dans la plaque à visser (2) jusque dans le taraudage (29) et prend appui sur le côté de la plaque à visser (2) qui est opposé à la plaque de retenue (3).

10. Système de retenue selon l'une des revendications précédentes,
**caractérisé en ce que**
deux clavettes de rainure (31, 31', 31") sont présentes, entre lesquelles est disposée une plaquette d'écartement (26) coulissable dans le profil à rainure (30) de la plaque de retenue (3).

11. Système de paroi de séparation pour le domaine des sanitaires présentant plusieurs éléments de paroi (11, 12, 13, 13', 13"), **caractérisé en ce que** les éléments de paroi (11, 12, 13, 13', 13") sont maintenus dans l'état de service souhaité avec le système de retenue selon l'une des revendications précédentes avec plusieurs plaques à visser (2) et plaques de retenue (3).
